# EUROPÄISCHE PATENTSCHRIFT

(11) **EP 1 347 226 B1**
(45) Veröffentlichungstag und Bekanntmachung des Hinweises auf die Patenterteilung: **14.12.2005**
(21) Anmeldenummer: 03090053.4
(22) Anmeldetag: 07.03.2003
(51) Int. Cl.: F16L 13/14, F16L 19/065

(54) **Rohrkupplung**
Pipe coupling
Raccord de tuyau

(30) Priorität: 20.03.2002 DE 10213378; 11.02.2003 DE 10306337
(43) Veröffentlichungstag der Anmeldung: 24.09.2003
(73) Patentinhaber: Geberit Mapress GmbH, 40764 Langenfeld (DE)
(72) Erfinder: Sedlak, Bernd, 45478 Mülheim (DE)
(74) Vertreter: Meissner, Peter E.

(56) Entgegenhaltungen:
- DE-B- 1 218 819
- DE-C- 19 856 523
- FR-A- 2 361 594
- GB-A- 1 002 472
- GB-A- 1 011 610
- US-A- 3 498 648
- US-A- 5 303 958
- US-A- 6 131 964

## Beschreibung

Die Erfindung betrifft eine Rohrkupplung gemäß dem Oberbegriff des Patentanspruches 1.

Eine gattungsbildende Rohrkupplung ist aus der DE 198 56 523 C1 bekannt. Sie besteht aus einem metallischen hohlen Kupplungskörper mit einer gestuften Außenfläche und einer profilierten Innenseite, die ausgebildet ist, ein metallisches Rohr aufzunehmen. Zur Rohrkupplung gehört weiterhin mindestens ein hohler Pressring, der über die Außenfläche des Kupplungskörpers axial zwängbar ist. Dabei wird zumindest ein Teil der Innenseite des Kupplungskörpers auf die Außenfläche des Rohres gedrängt, um eine metallische Dichtung zu bilden. Auf der Innenseite des Kupplungskörpers sind Zahnmittel in Form von Haupt- und Stützzähnen definiert, die fest in das Rohr einbeißen, wenn der Pressring über die Außenfläche des Kupplungskörpers gezwängt wird. An den ersten Abschnitt schließt sich ein zweiter Abschnitt an, der als Flansch ausgebildet ist und im montierten Zustand der Rohrkupplung einen Anschlag für den aufschiebbaren Pressring bildet. Zwischen den beiden benachbart liegenden als Flansche ausgebildeten Abschnitten ist eine Nut zur Aufnahme eines Werkzeuges vorgesehen.

Eine vergleichbare Rohrkupplung ist in der US 3,498,668 A offenbart. Der einteilig ausgebildete hohle Kupplungskörper weist beidseitig je einen Abschnitt auf, der sich bis zum als Flansch ausgebildeten Abschnitt erstreckt und außenseitig mit einer durchgehend glatten kegeligen Fläche versehen ist. Innenseitig weist der Kupplungskörper eingangsseitig einen Abschnitt mit einer zylindrisch ausgebildeten Fläche auf, an den sich ein Abschnitt mit mehreren gleichartig ausgebildeten Zahnmitteln anschließt. Am Ende der Erstreckung dieses Abschnittes folgt ein weiterer Abschnitt mit einer zylindrischen Fläche, der sich bis in den Flanschbereich erstreckt. Im Flanschbereich ist innenseitig ein ringförmiger Steg angeordnet, der den Anschlag für die beiden einzuschiebenden Rohre bildet. Die Zahnmittel weisen einen flach ausgebildeten Fuß auf, wobei die eine Flanke schräg verläuft, während die zweite Flanke nahezu senkrecht auf der Längsachse des Kupplungskörpers steht und beide Flanken in einen Abschnitt mit einer zylindrischen Fläche übergehen.
Eine weitere Rohrkupplung ist aus der GS 1,002,472 A bekannt. Die in dieser Schrift offenbarte Konstruktion ist vergleichbar aufgebaut wie schon zuvor in der US 3,498,648 A beschrieben. Unterschiedlich ist, dass statt eines dickwandigen Flansches in der Mitte ein etwas dickerer ringförmiger Abschnitt angeordnet ist, der auf der Außenseite mit einem Gewinde versehen ist. Zur Erleichterung der Demontage der Rohrkupplung kann auf diesen Abschnitt eine Mutter aufgeschraubt werden. Damit der Pressring nach dem Aufschieben beispielsweise durch Vibration nicht zurück gleiten kann, weist dieser auf der Innenseite eine scharfkantige Ausnehmung auf, in die durch den radialen Pressdruck beim Aufschieben des Pressringes ein Oberflächenbereich des Kupplungskörpers hineinfließt. Nachteilig bei allen bekannten Konstruktionen ist, dass der Kupplungskörper ein aufwendig herzustellendes Drehteil ist und die übergroße Längserstreckung ein großes Zerspanungsvolumen bedeutet. Von weiterem Nachteil ist, dass für Fittingtypen wie Bogen, T-Stück oder Übergangsstück der dafür herzustellende Kupplungskörper aufwendig und in der Herstellung teuer ist. Die teilweise scharfkantigen Obergänge vom Aufschubbereich in den Flanschbereich erzeugen wegen der damit verbundenen Kerbwirkung Spannungsspitzen, die zum Versagen des Bauteils führen können.

In der US 6,131,964 ist eine Rohrverbindung offenbart, die aus einem hohlen Kupplungskörper und einem außen darauf axial zwängbaren Pressring besteht.

Die Innenseite des hohlen Kupplungskörpers ist teilweise profiliert und so ausgebildet, um ein damit zu verbindendes Rohr aufzunehmen. Die Außenkontur weist zwei Abschnitte mit zylindrischer Außenfläche auf, die durch einen kegeligen Übergangsabschnitt voneinander getrennt sind. Der zweite Abschnitt erstreckt sich bis zu einem Flansch, an den sich auf der rückwärtigen Seite ein weiterer zylindrisch ausgebildeter Abschnitt anschließt. Im ersten Abschnitt der Außenkontur kann die Außenfläche teilweise mit einer Riffelung versehen. Auf der Innenseite sind insgesamt vier Zahnelemente angeordnet, wobei das einschiebseitig erste Zahnelement als Torsionssicherung ausgebildet ist. Im Anfangsbereich des zweiten Abschnittes befindet sich das als Hauptzahn ausgebildete Zahnelement, während die beiden übrigen Zahnelemente im Abstand dazu angeordnet und als Nebenzahn ausgebildet sind. Der Anschlag für das einzuschiebende Rohr befindet sich im Flanschbereich. Um den Pressring leichter aufschieben zu können ist der stirnseitige Bereich des Kupplungskörpers als Schlupffase ausgebildet.

Der mit dem Kupplungskörper zusammenwirkende Pressring weist auf der Innenseite insgesamt drei zylindrische Bohrungen auf, die durch kegelige Übergangsabschnitte voneinander getrennt sind.

Der dem Flansch zugewandte stirnseitige Bereich ist mit einer kegelartigen Erweiterung versehen, wobei der Kegel dem Kegel des Übergangsabschnittes zwischen dem ersten und zweiten Abschnitt des Kupplungskörpers angepasst ist.

Die Lage der zylindrischen Bohrungen des Pressringes ist in Bezug auf die beiden Abschnitte des Kupplungskörpers so gewählt, dass nach dem Aufschieben des Pressringes im Bereich des Hauptzahnes die größte Überdeckung auftritt.

Aufgabe der Erfindung ist es, eine Rohrkupplung der gattungsgemäßen Art anzugeben, die einfach und kostengünstig herstellbar, für alle Fittingtypen verwendbar ist und im Hinblick auf Dauerbelastung keine Bereiche mit kritischen Spannungsspitzen aufweist.

Diese Aufgabe wird ausgehend vom Oberbegriff in Verbindung mit den kennzeichnenden Merkmalen des Patentanspruches 1 gelöst. Vorteilhafte Weiterbildungen sind jeweils Gegenstand von Unteransprüchen.

Nach der Lehre der Erfindung weist der Kupplungskörper einschiebseitig gesehen einen ersten Abschnitt mit einer durchgehend glatten kegeligen Außenfläche auf, an den sich ein Abschnitt mit einer zylindrischen Außenfläche anschließt, der sich bis zu dem als Flansch ausgebildeten Bereich erstreckt. Ein Teilbereich der zylindrischen Außenfläche bildet mit der dazugehörigen Innenseite einen ersten zylindrischen Abschnitt und der Flansch ist auf der anderen Seite verbunden mit einem zweiten zylindrisch ausgebildeten Abschnitt.

Auf der Innenseite der kegeligen Außenfläche sind mindestens zwei nebeneinander liegende gleichartige Zahnmittel vorgesehen, wobei das erste Zahnmittel im Anfangsbereich der kegeligen Außenfläche angeordnet ist und an das letzte Zahnmittel sich der erste zylindrisch ausgebildete Abschnitt anschließt, dessen Innenseite sich bis in den Bereich des Flansches erstreckt. Der Anschlag für das einzuschiebende Rohr ist in Einschiebrichtung gesehen nach dem Flanschbereich vorgesehen.

Die vorgeschlagene Rohrkupplung hat den Vorteil, dass die Einfachheit der Ausführung und die Verkürzung der Länge die Herstellung erheblich verbilligt. Für die Dauerhaltbarkeit sind der Wechsel der Außenfläche von kegelig auf zylindrisch von Bedeutung. Dieser Wechsel reduziert die Spannungsspitzen im kritischen Übergangsbereich von der dünnwandigen Hülse zum dickwandigen Flansch, weil der Pressring beim Aufschieben in den flanschnahen Bereich wegen der abnehmenden Überdeckung nur noch eine geringe Kraft auf die Hülse ausübt. Dieser flanschnahe Bereich wirkt unter elastischen Bedingungen wie ein Gelenk, wenn die Zahnmittel beim Aufschieben des Pressringes in die Außenfläche des eingeschobenen Rohres radial eingedrückt werden.

Zur Reduzierung der Spannungsspitzen wird weiterhin vorgeschlagen, den Übergang von der zylindrischen Außenfläche und von der Innenseite des ersten zylindrisch ausgebildeten Abschnittes zum Flanschbereich abzurunden, wobei der Innendurchmesser des ersten zylindrisch ausgebildeten Abschnittes größer ist als der Innendurchmesser des Flansches. Die bislang bekannten scharfkantigen Übergänge haben unter Dauerschwingbelastung zu Anrissen und letztendlich zum Versagen des Bauteiles geführt.

Von Bedeutung ist auch, dass der Anschlag für das einzuschiebende Rohr hinter den Bereich des Flansches gelegt wurde, so dass in diesem Bereich eine gute Führung für das Rohr gegeben ist. Im Stand der Technik befindet sich der Führungsbereich für das Rohr vor den Zahnmitteln, was zur Folge hat, dass sich dieser Bereich beim Aufschieben des Pressringes auf dem Rohr abstützt und damit das Eindrücken der Zahnmittel behindert.

Für ein sicheres Einbeißen der Zahnmittel beträgt die Stegbreite des Fußes des Zahnmittels höchstens 0,2 mm. Vorzugsweise ist der Fußbereich des Zahnmittels spitz ausgebildet. Die Flanken des Zahnmittels sind im Querschnitt gesehen kreisförmig ausgebildet, wobei der Mittelpunkt symmetrisch zu zwei benachbart liegenden Zahnmitteln zur Achse des Kupplungskörpers hin verschoben ist. Bei einer anderen Ausführungsform ist die eingangsseitig zugewandte Flanke des Zahnmittels bogenförmig und die dem Flansch zugewandte Flanke gerade ausgebildet.

Vorzugsweise sind auf der Innenseite des Kupplungskörpers drei und mehr gleichartig ausgebildete Zahnmittel vorgesehen, die im Bereich der kegeligen Außenfläche angeordnet sind. Alternativ kann es von Vorteil sein, wenn das letzte Zahnmittel im Bereich der zylindrischen Außenfläche angeordnet ist.

Zum leichteren Aufschieben des Pressringes auf den Kupplungskörper ist der Stirnseitenbereich des Kupplungskörpers mit einer außenliegenden und der Pressring mit einer innenliegenden Schlupffase versehen. Im Regelfall wird für kleinere Nennabmessungen (35 mm) die Kegelneigung der Außenfläche von 5° für eine Selbsthemmung des Pressringes ausreichend sein.

Um auch für größere Nennabmessungen die Positionierung des Pressringes nach dem Aufschieben sicherzustellen, wird weiterbildend vorgeschlagen, im Bereich des vor dem Flanschbereich liegenden ersten zylindrisch ausgebildeten Abschnittes auf der Außenfläche eine sich nach außen erstreckende ringförmige Wulst anzuordnen, wobei der Pressring auf der Innenseite eine komplementär dazu ausgebildete Ausnehmung aufweist. Das führt beim Aufschieben des Pressringes zu einem elastischen Einrasten mit einem Formschluss.

Zur Reduzierung der axialen Presskraft für das Werkzeug ist alternativ der Kupplungskörper im Bereich zwischen Stirnseite und erstem Zahnmittel auf der Außenfläche mit einer ringförmigen Ausnehmung versehen und der Pressring weist dazu auf der Innenseite eine komplementär ausgebildete ringförmige Wulst auf. Auch diese Anordnung führt zu einem Einrasten nach dem Aufschieben des Pressringes.

Bei einer weiteren Ausführungsform wird die Abrutschsicherung für den Pressring dadurch erreicht, dass die dem Flanschbereich abgewandte Stirnseite des Pressringes auf der Innenseite scharfkantig ausgebildet ist und im verpressten Zustand im Bereich vor dem ersten Zahnmittel liegt. Bei der Verpressung wird der freistehende Teil des Kupplungskörpers etwas hoch gedrückt und bildet damit die Abrutschsicherung.

Der aus mindestens einem Kupplungskörper bestehende Fitting kann einteilig als Drehteil hergestellt werden. Diese Herstellweise wird vorzugsweise bei geraden Fittingtypen, wie Muffen und Übergangsstücken, Anwendung finden. Bei Bögen und insbesondere bei T-Stücken wird weiterbildend vorgeschlagen, den, den Typ des Fittings charakterisierenden Bereich, als separates Teil auszubilden und mit dem als Kupplungskörper ausgebildeten übrigen Bereich stoffschlüssig zu verbinden. Die stoffschlüssige Verbindung kann ein Schweißen, Löten oder Kleben sein.

Die Wirtschaftlichkeit der geschweißten Variante ist dann besonders hoch, wenn das separate Teil ganz oder teilweise ein Element eines Standard-Fittings ist. Der Mehraufwand reduziert sich dann auf die Verbindung des Elementes des Standard-Fittings mit einem oder zwei Kupplungskörpern.

Je nach Fittingtyp übemimmt das separate Teil die Anschlagfunktion für das einzuschiebende Rohr oder der Kupplungskörper. Im letzteren Fall schließt sich am Ende der Er-streckung des zweiten zylindrisch ausgebildeten Abschnittes mit einem Absatz ein dritter zylindrisch ausgebildeter Abschnitt an, der einen geringeren Innendurchmesser aufweist als der zweite zylindrisch ausgebildete Abschnitt.

Die Vorteile der vorgeschlagenen Rohrkupplung können wie folgt zusammengefasst werden:
- für alle Fittingtypen anwendbar,
- an den Kupplungskörper können auch Übergangsstücke oder Armaturen befestigt werden,
- der Kupplungskörper ist einfach herstellbar und das Zerspanungsvolumen ist wegen der kurzen axialen Länge gering,
- die Dauerhaltbarkeit ist wegen des Wechsels der Außenflächen von kegelig auf zylindrisch und der gerundeten Übergänge höher,
- die Zahnmittel sind wegen der besseren Zugänglichkeit einfacher herstellbar,
- wesentliche Elemente eines Standard-Fittings können verwendet werden.

In einer Zeichnung wird anhand mehrerer Ausführungsbeispiele die erfindungsgemäß ausgebildete Rohrkupplung näher erläutert.

Es zeigen:
- **Figur 1**: in hälftigem Längsschnitt eine erfindungsgemäß ausgebildete Rohrkupplung als Muffenverbindung ohne Pressringe,
- **Figur 2**: im Längsschnitt und Ansicht eine zweite Ausführungsform des erfindungsgemäß ausgebildeten Kupplungskörpers,
- **Figur 3**: eine vergrößerte Darstellung von Figur 2,
- **Figur 4**: einen Längsschnitt und Ansicht einer erfindungsgemäß ausgebildeten Rohrkupplung als T-Stück mit Pressringen und eingeschobenen Rohren,
- **Figur 5**: im Längsschnitt und Ansicht eine Rohrkupplung als Übergangsstück vor der Verpressung,
- **Figur 6**: im Längsschnitt und Ansicht eine Rohrkupplung als Übergangsstück nach der Verpressung,
- **Figur 7**: im Längsschnitt und Ansicht eine Rohrkupplung als Bogen ohne Pressring und eingeschobene Rohre,
- **Figur 8**: wie Figur 3 mit Details der Zahnelemente,
- **Figur 9, 10**: im Längsschnitt ein erstes Ausführungsbeispiel für eine Abrutschsicherung,
- **Figur 11, 12**: ein zweites Ausführungsbeispiel für eine Abrutschsicherung,
- **Figur 13, 14**: ein drittes Ausführungsbeispiel für eine Abrutschsicherung.

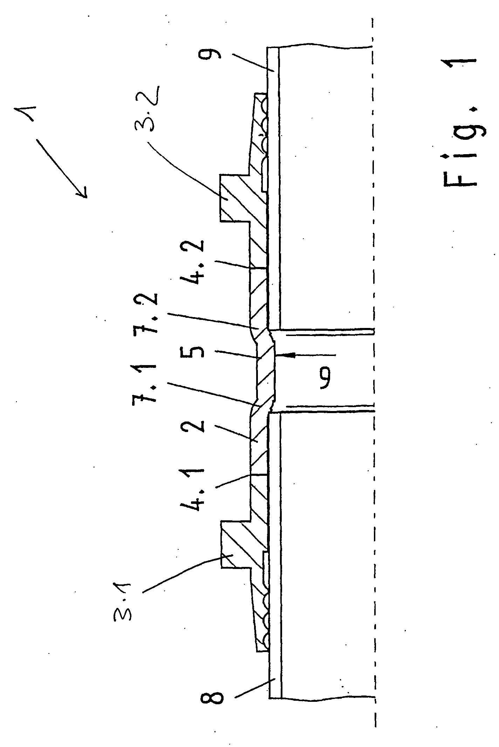

In **Figur 1** ist in einem hälftigen Längsschnitt eine erfindungsgemäß ausgebildete Rohrkupplung dargestellt. Dieses Ausführungsbeispiel zeigt einen Fitting 1 in Form einer Muffe. Der diesen Fittingtyp - Muffe - charakterisierende Bereich ist als separates Teil 2 ausgebildet und in diesem Ausführungsbeispiel mit zwei als Kupplungskörper 3.1, 3.2 ausgebildeten Bereichen fest verbunden.

Vorzugsweise erfolgt die Verbindung zwischen dem separaten Teil 2 und den Kupplungskörpern 3.1, 3.2 über Schweißen, im Falle der Verwendung eines hochlegierten Stahles, beispielsweise 1.4401, mittels einer WIG-Schweißnaht 4.1, 4.2.

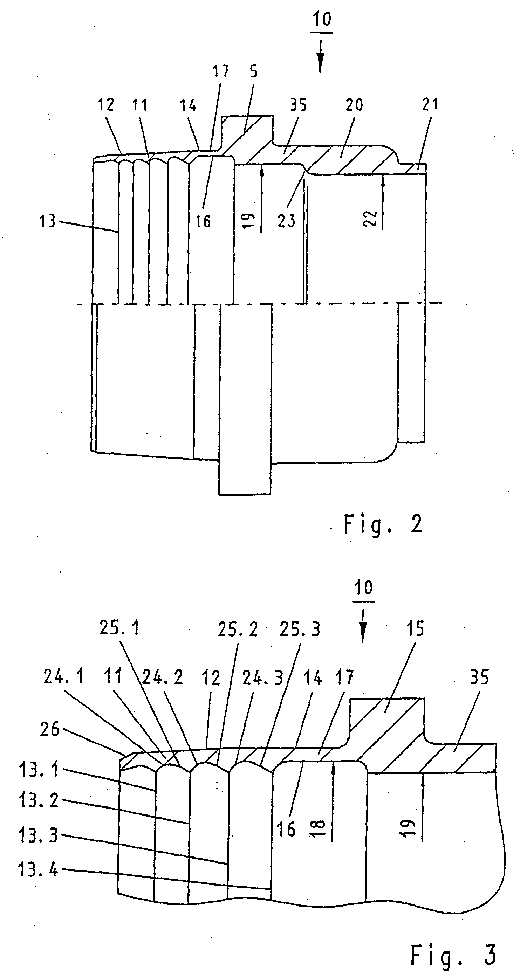

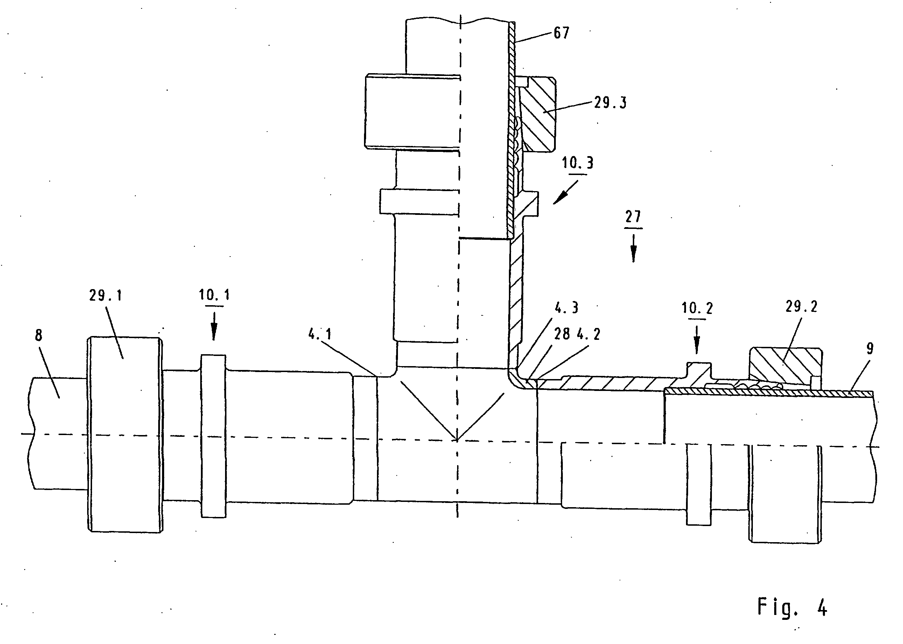

Das separate Teil 2 weist einen mittleren Abschnitt 5 auf, der mit einem geringeren Innendurchmesser 6 versehen ist, so dass sich je ein Absatz 7.1, 7.2 ergibt, der einen Anschlag für das jeweils eingeschobene Rohr 8, 9 bildet. Die für die Verzwängung des jeweiligen Kupplungskörpers 3.1, 3.2 erforderlichen Pressringe sind hier der Übersichtlichkeit wegen weggelassen worden (siehe **Figur 4**). Die Details der Kupplungskörper werden in den beiden nachfolgenden **Figuren 2** und **3** näher erläutert.

In **Figur 2** ist in einem Längsschnitt und einer Ansicht und in **Figur 3** in einer Vergrößerung eine andere Ausführungsform eines Kupplungskörpers 10 dargestellt im Vergleich zur Ausführung gemäß **Figur 1**.

Der erfindungsgemäß ausgebildete Kupplungskörper 10 weist eingangsseitig einen ersten Abschnitt 11 mit einer durchgehend glatten kegeligen Außenfläche 12 und eine mit Zahnmitteln 13 versehene Innenseite auf. An die kegelige Außenfläche 12 schließt sich eine zylindrische Außenfläche 14 an, die sich bis zum als Flansch 15 ausgebildeten Bereich erstreckt.

Der Übergang von der zylindrischen Außenfläche 14 zum Flansch 15 erfolgt abgerundet. Die zur zylindrischen Außenfläche 14 zugehörige Innenseite 16 bildet zusammen einen ersten zylindrisch ausgebildeten Abschnitt 17, wobei die Innenseite 16 sich bis in den Bereich des Flansches 15 hinein erstreckt. Der Innendurchmesser 18 des ersten zylindrisch ausgebildeten Abschnittes 17 ist größer als der Innendurchmesser 19 des Flansches 15.

Der Übergang von der Innenseite 16 des ersten zylindrisch ausgebildeten Abschnittes 17 in den Bereich des Flansches 15 erfolgt abgerundet. Auf der anderen Seite des Flansches 15 schließt sich ein zweiter zylindrisch ausgebildeter Abschnitt 35 an. Dieser geht über in einen dickwandigeren dritten zylindrisch ausgebildeten Abschnitt 20.

Der Innendurchmesser 22 des dritten zylindrisch ausgebildeten Abschnittes 20 ist geringer als der Innendurchmesser 19 des vorhergehenden Abschnittes 35, wobei der Übergang 23 vom zweiten 35 zum dritten zylindrisch ausgebildeten Abschnitt 20 einen Anschlag für das eingeschobene Rohr (hier nicht dargestellt) bildet. Im Unterschied zum bekannten Stand der Technik liegt dieser Anschlag einschubseitig gesehen hinter dem Bereich des Flansches 15, so dass entlang dieser Erstreckung das Rohr gut geführt ist.

Je nach Art des Anschlusses des Kupplungskörpers 10 an das separate Fittingteil (hier nicht dargestellt) geht der dritte zylindrisch ausgebildete Abschnitt 20 über in einen vierten zylindrisch ausgebildeten Abschnitt 21, der bei gleichem Innendurchmesser 22 einen reduzierten Außendurchmesser aufweist.

**Figur 3** zeigt in einer Vergrößerung den eingangsseitigen Bereich des Kupplungskörpers 10. In diesem Ausführungsbeispiel sind auf der Innenseite insgesamt vier gleichartige Zahnmittel 13.1 - 13.4 vorgesehen. Die drei erstgenannten 13.1 - 13.3 liegen im Bereich der kegeligen Außenfläche 12 während das letztgenannte Zahnmittel 13.4 im Bereich der zylindrischen Außenfläche 14 liegt. Je nach Nennabmessung und Auslegung kann sich diese Aufteilung verschieben; d. h. es können auch beispielsweise alle Zahnmittel 13 im Bereich der kegeligen Außenfläche 12 angeordnet sein.

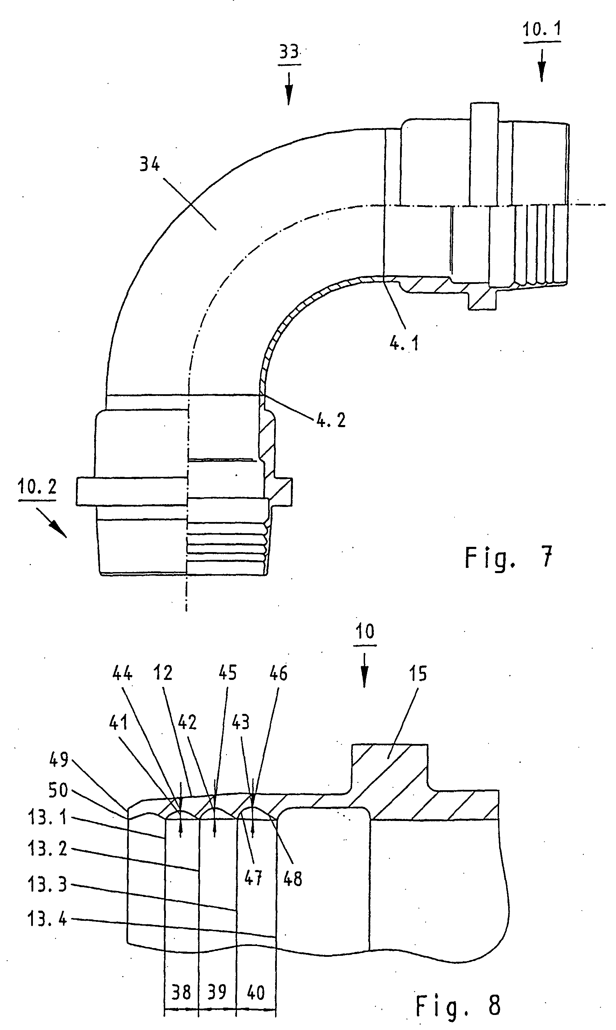

Damit die Zahnmittel 13 fest in die Außenfläche des jeweils eingeschobenen Rohres 8, 9 (**Figur 1**) einbeißen können, sind die Zahnmittel 13 spitz ausgebildet. Weitere Details der Zahnmittelausbildung sind in **Figur 7** dargestellt.

Der stirnseitige Bereich des Kupplungskörpers 10 weist außenseitig eine Schlupffase 26 auf, die das Aufschieben des Pressringes erleichtert. Innenseitig ist dieser Bereich scharfkantig ausgebildet, so dass dieser zur axialen Verklammerung beiträgt, da beim Verpressen das eingeschobene Rohr etwas aufgebogen wird.

Die Vorteilhaftigkeit der Erfindung wird in der in **Figur 4** dargestellten Ausführungsform deutlich erkennbar. In diesem Beispiel ist der Fitting 27 ein T-Stück.

Der diesen Typ charakterisierende Bereich ist wiederum als separates Teil 28 ausgebildet. Es ist gekennzeichnet durch ein Durchgangsrohr und einen senkrecht dazu liegenden Abzweig. Dieses Teil 28 ist über insgesamt drei WIG-Schweißnähte 4.1, 4.2, 4.3 mit Kupplungskörpern 10.1, 10.2, 10.3 verbunden.

Die für die Zwängung erforderlichen Pressringe 29.1 - 29.3 sind hier mit eingezeichnet. In bekannter Weise werden nach dem Einschieben der Rohre 8, 9, 67 die Pressringe 29.1 - 29.3 axial entlang der Außenfläche 12, 14 (**Figur 3**) des jeweiligen Kupplungskörpers 10.1, 10.2, 10.3 bewegt. Dabei werden die Zahnmittel 13 radial nach innen gedrückt, so dass sich der Fußbereich in die Außenoberfläche des Rohres 8, 9, 67 eingräbt. Dieses bildet dann eine metallische Dichtung und gleichzeitig auch die axiale Sicherung gegen ein Herausdrücken des Rohres bei Innenbelastung.

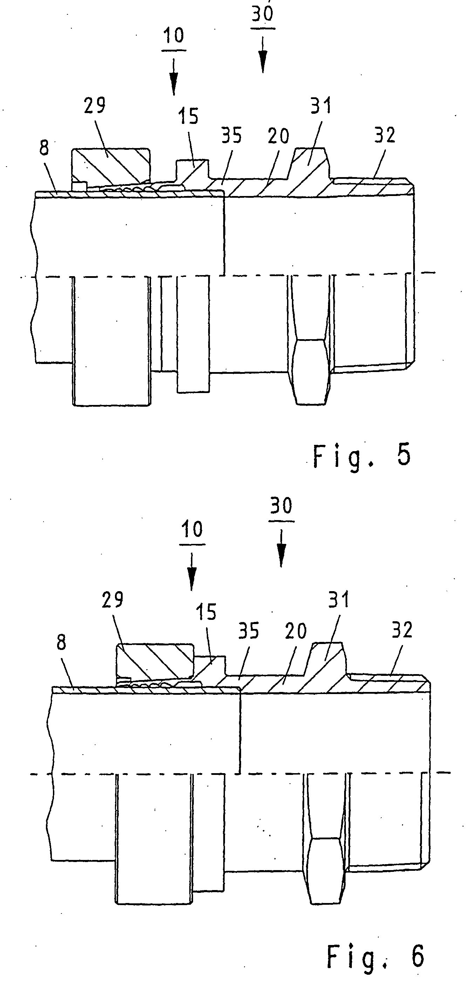

**Figur 5, 6** zeigen in einem Längsschnitt und einer Ansicht einen Fitting 30 als Übergangsstück einmal vor und einmal nach der Verpressung, wobei für gleiche Teile gleiche Bezugszeichen verwendet worden sind. In diesem Ausführungsbeispiel ist der Fitting 30 einteilig ausgebildet. Er weist, wie vorher schon beschrieben, einen erfindungsgemäß ausgebildeten Kupplungskörper 10 auf, der einteilig mit einem Gewindestück verbunden ist. Das Gewindestück weist in bekannter Weise einen Außensechskant 31 auf, der dann übergeht in einen Abschnitt mit einem Außengewinde 32. Alternativ könnte es auch ein Innengewinde sein.

Bei geraden Fittings geringerer Abmessung bietet sich diese einteilige Herstellweise an, da der Schweißaufwand und die Überprüfung der Schweißnaht zu aufwendig wären.

**Figur 7** zeigt in einem Längsschnitt und einer Ansicht einen Fitting 33 als 90°-Bogen. Der diesen Typ des Fittings 33 charakterisierende Bereich ist als Standardbogen 34 ausgebildet. Erfindungsgemäß sind die Stirnseiten des Standardbogens 34 mit je einem in **Figur 2** dargestellten Kupplungskörper 10.1, 10.2, über eine WIG-Schweißnaht 4.1, 4.2 verbunden. Die für die Zwängung erforderlichen Pressringe (siehe **Figur 4**) sind hier nicht dargestellt. Der Anschlag für das einzuschiebende Rohr befindet sich im jeweiligen Kupplungskörper 10.1, 10.2.

**Figur 8** zeigt wie **Figur 3** eine vergrößerte Darstellung des Kupplungskörpers 10. Wie schon zuvor erwähnt, sind alle Zahnmittel 13.1 - 13.4 spitz ausgebildet. Die Abstände 38 - 40 zwischen den Zahnmitteln 13.1 - 13.4 nehmen in Richtung Flansch 15 zu, ebenso die Höhe 41 - 43. Die Scheitelpunkte 44 - 46 der Freistiche liegen auf einer gedachten Verbindungslinie, die parallel liegt zur Neigung der glatten kegeligen Außenfläche 12. Die einschiebseitig zugewandten Flanken 47 der Zahnmittel 13.1 - 13.4 sind bogenförmig, während die dem Flanschbereich zugewandten Flanken 48 gerade sind. Andere Arten der Ausbildung der Flanken sind möglich und vorstellbar.

Der vor dem ersten Zahnmittel 13.1 liegende stirnseitige Bereich ist innenseitig ebenfalls mit einem Freistich versehen und zwar so, dass der Schnitt mit der Stirnseite 49 eine scharfkantige Ecke 50 ergibt. Diese Ecke 50 wirkt unterstützend für die Verklammerung, da beim Verpressen das hier nicht dargestellte Rohr 8 etwas aufgebogen wird und an der Ecke 50 zur Anlage kommt.

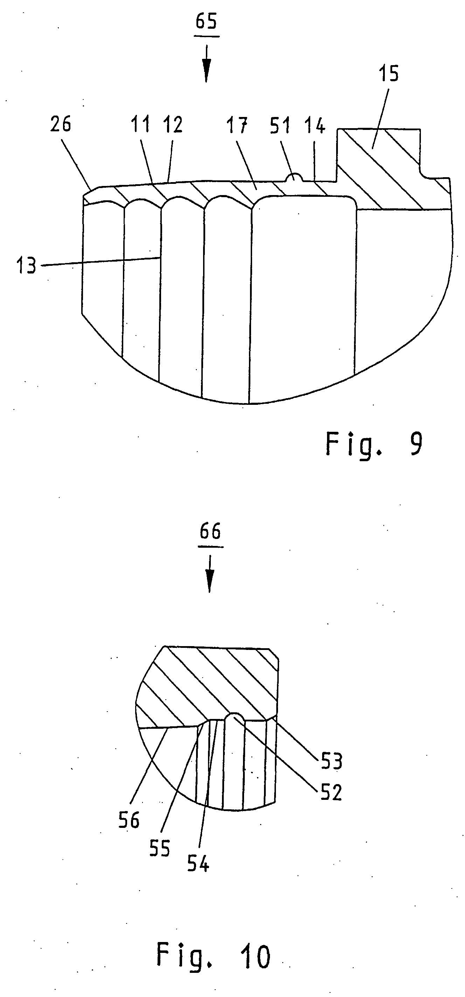

In den **Figuren 9 - 14** sind im Längsschnitt drei Ausführungsbeispiele für eine Abrutschsicherung dargestellt. **Figur 9** zeigt einen Ausschnitt eines Kupplungskörpers 65, wie er aus-führlich in den **Figuren 2 und 3** erläutert worden ist.

Üblicherweise ist bei einer Kegelneigung von 5° der kegeligen Außenfläche 12 die Selbsthemmung für den aufgeschobenen Pressring 29 ausreichend. Um dies aber auch für größere Abmessungen unter erschwerten Bedingungen, z. B. Rohrleitung mit starken Vibrationsbelastungen, sicherzustellen, wird für ein erstes Ausführungsbeispiel vorgeschlagen im Bereich des ersten zylindrisch ausgebildeten Abschnittes 17 auf der zylindrischen Außenfläche 14 eine sich nach außen erstreckende ringförmige Wulst 51 anzuordnen. Der aufschiebbare Pressring 66 weist dazu eine komplementär ausgebildete Ausnehmung 52 auf.

Zum leichteren Aufschieben ist der dem Flanschbereich 15 zugewandte Stirnseitenbereich des Pressringes 66 innenseitig mit einer Schlupffase 53 versehen. Diese wirkt mit der im stirnseitigen Bereich des Kupplungskörpers 65 angeordneten Schlupffase 26 zusammen. An die Schlupffase 53 des Pressringes 66 schließt sich eine zylindrische Bohrung 54 an, die mit einem Absatz 55 übergeht in eine kegelige Bohrung 56. Die Neigung dieser Bohrung 56 entspricht der Neigung der kegeligen Außenfläche 12 des ersten Abschnittes 11 des Kupplungskörpers 65.

Um einen ausreichend radialen Druck auf die Zahnmittel 13 auszuüben, ist das Innenmaß der kegeligen Bohrung 56 des Pressringes 66 geringer als das Außenmaß des ersten Abschnittes 11 des Kupplungskörpers 65. Man bezeichnet dies als Überdeckung. Die Mindestüberdeckung beträgt 0,3 mm, vorzugsweise liegt sie bei 0,45 mm.

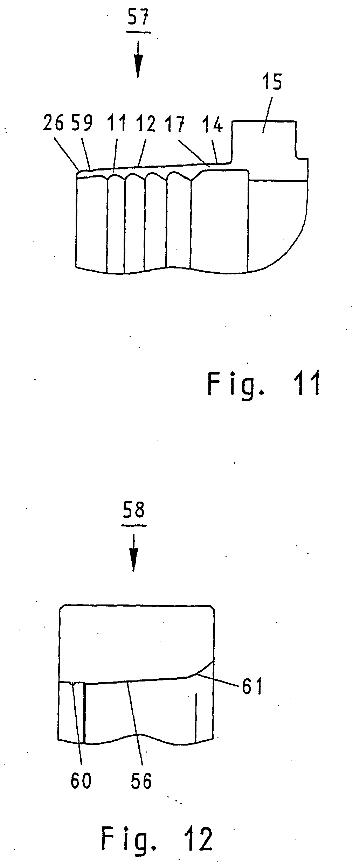

In den **Figuren 11 und 12** ist ein zweites Ausführungsbeispiel dargestellt, wobei für gleiche Teile gleiche Bezugszeichen verwendet worden sind. Im Unterschied zum ersten Ausführungsbeispiel weist für eine Abrutschsicherung der Kupplungskörper 57 im Übergangsbereich zwischen erstem Abschnitt 11 und Schlupffase 26 eine ringförmige Ausnehmung 59 auf. Komplementär dazu ist der Pressring 58 mit einer ringförmigen Wulst 60 versehen.

Der Vorteil dieser Anordnung ist darin zu sehen, dass für die formschlüssige Verriegelung weniger Presskraft benötigt wird. In diesem Ausführungsbeispiel ist auch die kelchartige Ausnehmung 61 in dem dem Flanschbereich 15 zugewandten Stirnseitenbereich des Pressringes 58 zu erkennen. Dies führt dazu, dass am Ende des Aufschiebens des Pressringes 58 der erste zylindrisch ausgebildete Abschnitt 17 im kritischen Übergangsbereich zum dickwandigen Bereich des Flansches 15 entlastet wird.

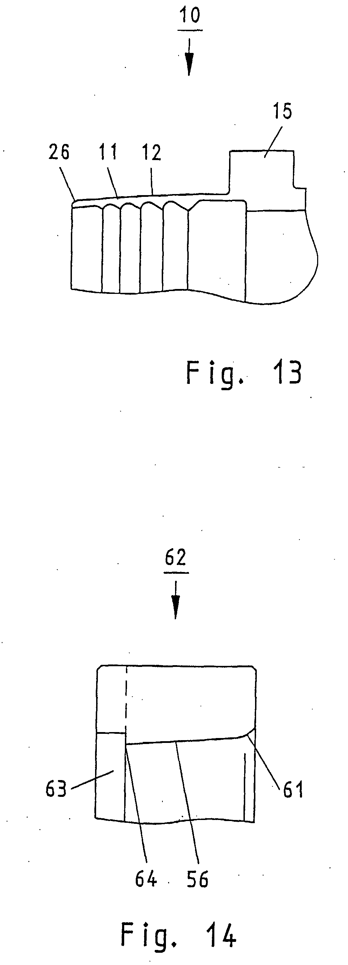

Eine weitere Möglichkeit der Ausbildung einer Abrutschsicherung ist in den **Figuren 13 und 14** dargestellt. Bei dieser Anordnung ist der Pressring 62 in dem dem Bereich des Flansches 15 abgewandten Stirnseitenbereich innenseitig mit einer zylindrischen Ausnehmung 63 versehen, die im Schnitt mit der kegeligen Bohrung 56 eine scharfe Ecke 64 ergibt.

Nach dem Aufschieben des Pressringes 62 auf den Kupplungskörper 10 wird durch den radialen Pressdruck der nicht durch den Pressring 62 abgedeckte Anfangsbereich des ersten Abschnittes 11 des Kupplungskörpers 10 etwas elastisch aufgebogen und bildet somit die Abrutschsicherung. Dabei wirkt die Ecke 64 als Biegekante für das Aufbiegen. Der gleiche Effekt ist auch zu erreichen, wenn, wie mit gestrichelten Linien dargestellt, der Pressring 62 in seiner axialen Länge kürzer gewählt wird als die bis zum Flansch 15 sich erstreckende Länge des Kupplungskörpers 10.

### Bezugszeichenliste

| **Nr.** | **Bezeichnung** |
|---|---|
| 1 | Fitting (Muffe) |
| 2 | separates Teil (Muffe) |
| 3.1, 3.2 | Kupplungskörper |
| 4.1, 4.2 | WIG-Schweißnaht |
| 5 | mittlerer Abschnitt |
| 6 | Innendurchmesser (mittlerer Abschnitt) |
| 7.1, 7.2 | Absatz |
| 8, 9 | Rohr |
| 10, 10.1-10.3 | Kupplungskörper |
| 11 | erster Abschnitt Kupplungskörper |
| 12 | kegelige Außenfläche |
| 13, 13.1-13.4 | Zahnmittel |
| 14 | zylindrische Außenfläche |
| 15 | Flansch |
| 16 | Innenseite |
| 17 | erster zylindrisch ausgebildeter Abschnitt |
| 18 | Innendurchmesser (erster zylindrischer Abschnitt) |
| 19 | Innendurchmesser (Flanschbereich) |
| 20 | dritter zylindrisch ausgebildeter Abschnitt |
| 21 | vierter zylindrisch ausgebildeter Abschnitt |
| 22 | Innendurchmesser (dritter zylindrischer Abschnitt) |
| 23 | Übergang |
| 24 | Flanke Zahnmittel |
| 25 | Flanke Zahnmittel |
| 26 | Schlupffase (Kupplungskörper) |
| 27 | Fitting (T-Stück) |
| 28 | separates Teil (T-Stück) |
| 29.1-29.3 | Pressring |
| 30 | Fitting (Übergangsstück) |
| 31 | Außensechskant |
| 32 | Außengewinde |
| 33 | Fitting (Bogen) |
| 34 | Standardbogen |
| 35 | zweiter zylindrisch ausgebildeter Abschnitt |
| 38 - 40 | Abstand Zahnmittel |
| 41 - 43 | Höhe Zahnmittel |
| 44 - 46 | Scheitelpunkte der Freistiche |
| 47, 48 | Flanke Zahnmittel |
| 49 | Stimseite |
| 50 | Ecke |
| 51 | ringförmiger Wulst |
| 52 | Ausnehmung |
| 53 | Schlupffase (Pressring) |
| 54 | zylindrische Bohrung |
| 55 | Absatz |
| 56 | kegelige Bohrung |
| 57 | Kupplungskörper |
| 58 | Pressring |
| 59 | ringförmige Ausnehmung |
| 60 | ringförmige Wulst |
| 61 | kelchartige Ausnehmung |
| 62 | Pressring |
| 63 | zylindrische Ausnehmung |
| 64 | Ecke |
| 65 | Kupplungskörper |
| 66 | Pressring |
| 67 | Rohr |

## Patentansprüche

1. Rohrkupplung, bestehend aus - mindestens einem metallischen hohlen Kupplungskörper (3.1, 3.2) mit einer teilweise profilierten Innenseite, die ausgebildet ist, ein mit dem Kupplungskörper zu verbindendes, metallisches Rohr (8, 9, 67) aufzunehmen, - einem Anschlag für das einzuschiebende Rohr, - mindestens einem hohlen Pressring (29.1-29.3) der über die Außenfläche des Kupplungskörpers mit Überdeckung axial zwängbar ist, so dass zumindest ein Teil der Innenseite des Kupplungskörpers auf die Außenfläche des eingeschobenen Rohres gezwängt wird, um eine metallische Dichtung und axiale Sicherung zu bilden; - wobei die Innenseite des Kupplungskörpers Zahnmittel (13.1-13.4) definiert, die unter Radialdruck auf der Außenfläche des Rohres zur Anlage kommen, wenn der Pressring über die Außenfläche des Kupplungskörpers gezwängt wird, - einen als Flansch (15) ausgebildeten Bereich des Kupplungskörpers, wobei im verpressten Zustand der Pressring am Flansch zur Anlage kommt, wobei
der Kupplungskörper (3, 10, 57, 65) einschiebseitig gesehen einen ersten Abschnitt (11) mit einer durchgehend glatten kegeligen Außenfläche (12) aufweist, an den sich ein Abschnitt mit einer zylindrischen Außenfläche (14) anschließt, der sich bis zu dem als Flansch (15) ausgebildeten Bereich erstreckt, wobei ein Teilbereich der zylindrischen Außenfläche (14) mit der dazugehörigen Innenseite (16) einen ersten zylindrisch ausgebildeten Abschnitt (17) bildet und der Flansch (15) auf der anderen Seite verbunden ist mit einem zweiten zylindrisch ausgebildeten Abschnitt (35), **dadurch gekennzeichnet, dass** auf der Innenseite der kegeligen Außenfläche (12) mindestens zwei nebeneinander liegende gleichartige Zahnmittel (13) vorgesehen sind, wobei das erste Zahnmittel (13.1) in Einschiebrichtung gesehen im Anfangsbereich der kegeligen Außenfläche (12) angeordnet ist und an das letzte Zahnmittel (13.4) sich der erste zylindrisch ausgebildete Abschnitt (17) anschließt, dessen Innenseite (16) sich bis in den Bereich des Flansches (15) erstreckt und der Anschlag für das einzuschiebende Rohr (8, 9, 67) in Einschiebrichtung gesehen hinter dem Bereich des Flansches (15) vorgesehen ist und sich am Ende der Erstreckung des zweiten zylindrisch ausgebildeten Abschnittes (35)
entweder ein dritter, einen kleinen Innendurchmesser (22) aufweisender zylindrisch ausgebildeter Abschnitt (20) anschließt, wobei der Übergang vom zweiten (35) zum dritten (20) Abschnitt den Anschlag für das einzuschiebende Rohr (8, 9, 67) bildet
oder ein rohrförmiges Element anschließt, das einen zylindrisch ausgebildeten Abschnitt gleicher Art wie der zweite zylindrisch ausgebildete Abschnitt (35) aufweist, der dann mit einem Absatz (7.1) übergeht in einen weiteren, einen kleineren Innendurchmesser aufweisenden zylindrisch ausgebildeten Abschnitt (5), wobei der Absatz (7.1) den Anschlag für das einzuschiebende Rohr (8, 9) bildet.

2. Rohrkupplung nach Anspruch 1,
**dadurch gekennzeichnet,**
**dass** der Kupplungskörper (3, 10, 57, 65) bestehend aus den eine kegelige und eine zylindrische Außenfläche (12, 14) aufweisenden Abschnitten (11, 17), dem Flansch (15) und den zweiten und dritten zylindrisch ausgebildeten Abschnitten (35, 20), einteilig ausgebildet ist.

3. Rohrkupplung nach Anspruch 1,
**dadurch gekennzeichnet,**
**dass** der Kupplungskörper, bestehend aus den eine kegelige und eine zylindrische Außenfläche (12, 14) aufweisenden Abschnitten (11, 17), dem Flansch (15), dem zweiten zylindrisch ausgebildeten Abschnitt (35) und dem rohrförmigen Element, einteilig ausgebildet ist.

4. Rohrkupplung nach den Ansprüchen 1 und 2
**dadurch gekennzeichnet,**
**dass** der dritte zylindrisch ausgebildete Abschnitt (20) übergeht in einen vierten zylindrisch ausgebildeten Abschnitt (21), der bei gleichem Innendurchmesser (22) einen geringeren Außendurchmesser aufweist.

5. Rohrkupplung nach den Ansprüchen 1 - 4
**dadurch gekennzeichnet,**
**dass** die glatte kegefige Außenfläche (12) einen Neigungswinkel von < 5° aufweist.

6. Rohrkupplung nach den Ansprüchen 1-5
**dadurch gekennzeichnet,**
**dass** die Innenseite des Kupplungskörpers (3, 10, 57, 65) drei und mehr gleichartig ausgebildete Zahnmittel (13.1- 13.4) aufweist, die im Bereich der kegeligen Außenfläche (12) angeordnet sind.

7. Rohrkupplung nach den Ansprüchen 1-5
**dadurch gekennzeichnet,**
**dass** die Innenseite des Kupplungskörpers (3, 10, 57, 65) drei und mehr gleichartig ausgebildete Zahnmittel (13.1 - 13.4) aufweist, wovon in Einschiebrichtung gesehen das letzte Zahnmittel (13.4) im Bereich der zylindrischen Außenfläche (14) angeordnet ist.

8. Rohrkupplung nach den Ansprüchen 1, 6 und 7,
**dadurch gekennzeichnet,**
**dass** die Stegbreite am Fuß des Zahnmittels (13) höchstens 0,2 mm beträgt.

9. Rohrkupplung nach den Ansprüchen 1, 6 und 7
**dadurch gekennzeichnet,**
**dass** der Fuß des Zahnmittels (13) spitz ausgebildet ist.

10. Rohrkupplung nach den Ansprüchen 1, 6 und 7
**dadurch gekennzeichnet,**
**dass** die Abstände zwischen den Zahnmitteln (13) gleich sind.

11. Rohrkupplung nach den Ansprüchen 1, 6 und 7,
**dadurch gekennzeichnet,**
**dass** die Abstände (38 - 40) zwischen den Zahnmitteln (13.1 - 13.4) in Einschiebrichtung gesehen ansteigen.

12. Rohrkupplung nach den Ansprüchen 1, 6 - 11
**dadurch gekennzeichnet,**
**dass** die Höhe der Zahnmittel (13) gleich ist.

13. Rohrkupplung nach den Ansprüchen 1, 6 -11,
**dadurch gekennzeichnet,**
**dass** die Höhe (41 - 43) der Zahnmittel (13.1 - 13.4) in Einschiebrichtung gesehen ansteigt.

14. Rohrkupplung nach den Ansprüchen 1 und 13
**dadurch gekennzeichnet,**
**dass** die gedachte Verbindungslinie der Scheitelpunkte (44 - 46) zwischen den Zahnmitteln (13.1, 13.4) parallel zur Neigung der glatten kegeligen Außenfläche (12) des ersten Abschnittes (11) des Kupplungskörpers (10, 57, 65) liegt.

15. Rohrkupplung nach einem der Ansprüche 1, 6 -14,
**dadurch gekennzeichnet,**
**dass** im Querschnitt gesehen die Flanken des Zahnmittels (13) kreisförmig ausgebildet sind, wobei der Mittelpunkt symmetrisch zu zwei benachbart liegenden Zahnmitteln (13) zur Achse des Kupplungskörpers (3) hin verschoben ist.

16. Rohrkupplung nach den Ansprüchen 1, 6-14,
**dadurch gekennzeichnet,**
**dass** im Querschnitt gesehen die eingangseitig zugewandte Flanke (47) des Zahnmittels (13.1 - 13.4) bogenförmig und die dem Flansch (15) zugewandte Flanke (48) gerade ausgebildet ist.

17. Rohrkupplung nach einem der Ansprüche 1 - 16
**dadurch gekennzeichnet,**
**dass** der Stimseitenbereich des Kupplungskörpers (10, 57, 65) mit einer außenliegenden Schlupffase (26) versehen ist.

18. Rohrkupplung nach einem der Ansprüche 1- 17
**dadurch gekennzeichnet,**
**dass** die Innenseite der Stirnseite des Kupplungskörpers (10, 57, 65) scharfkantig ausgebildet und in Einschubrichtung kegelartig erweitert ist und mit einem abgerundeten Übergang in das erste Zahnmittel (13.1) übergeht.

19. Rohrkupplung nach einem der Ansprüche 1 -18
**dadurch gekennzeichnet,**
**dass** der Übergang von der zylindrischen Außenfläche (14) und von der Innenseite (16) des ersten zylindrisch ausgebildeten Abschnittes (17) zum Bereich des Flansches (15) abgerundet ist, wobei der Innendurchmesser (18) dieses Abschnittes (17) größer ist als der Innendurchmesser (19) des Flansches (15).

20. Rohrkupplung nach einem der Ansprüche 1 -19,
**dadurch gekennzeichnet,**
**dass** der Innendurchmesser (19) des Flansches (15) höchstens gleich oder etwas kleiner ist als die auf einer Horizontalen liegenden Innendurchmesser des Fußes der Zahnmittel (13).

21. Rohrkupplung nach einem der Ansprüche 1 - 20
**dadurch gekennzeichnet,**
**dass** der erste zylindrisch ausgebildete Abschnitt (17) einen Innendurchmesser (18) aufweist, der annähernd gleich ist dem der größten radialen Erstreckung der vor dem letzten Zahnmittel (13.4) liegenden bogenförmigen Ausnehmung.

22. Rohrkupplung nach einem der Ansprüche 1-21
**dadurch gekennzeichnet,**
**dass** im Bereich des vor dem Flansch (15) liegenden ersten zylindrisch ausgebildeten Abschnittes (17) auf der Außenfläche (14) eine sich nach außen erstreckende ringförmige Wulst (51) angeordnet ist und der Pressring (66) auf der Innenseite eine komplementär dazu ausgebildete Ausnehmung (52) aufweist.

23. Rohrkupplung nach einem der Ansprüche 1 - 22
**dadurch gekennzeichnet,**
**dass** der Pressring (66) in dem dem Flansch (15) zugewandten Stimseitenbereich mit einer innenliegenden Schlupffase (53) versehen ist, an die sich eine zylindrische Bohrung (54) anschließt, die dann mit einem Absatz (55) übergeht in eine kegelige Bohrung (56), deren Neigung komplementär ist zur Neigung der kegeligen Außenfläche (12) des ersten Abschnittes (11) des Kupplungskörpers (10, 57, 65).

24. Rohrkupplung nach einem der Ansprüche 1-21
**dadurch gekennzeichnet,**
**dass** der Kupplungskörper (57) im Bereich zwischen Stirnseite und erstem Zahnmittel (13. 1) auf der Außenfläche mit einer ringförmigen Ausnehmung (59) versehen ist und
der Pressring (58) auf der Innenseite eine komplementär dazu ausgebildete ringförmige Wulst (60) aufweist.

25. Rohrkupplung nach einem der Ansprüche 1-21
**dadurch gekennzeichnet, dass** die dem Flansch (15) abgewandte Stirnseite des Pressringes (62) auf der Innenseite scharfkantig ausgebildet ist und im verpressten Zustand im Bereich vor dem ersten Zahnmittel (13.1) liegt.

26. Rohrkupplung nach Anspruch 25
**dadurch gekennzeichnet,**
**dass** der Pressring (62) auf der dem Flansch abgewandten Seite innenseitig eine Ausnehmung (63) aufweist, die sich im verpressten Zustand bis in den Bereich vor dem ersten Zahnmittel (13.1) des Kupplungskörpers (10) erstreckt und die Stirnseiten von Pressring (62) und Kupplungskörper (10) bündig abschließen.

27. Rohrkupplung nach den Ansprüchen 24 - 26
**dadurch gekennzeichnet,**
**dass** der Pressring (58, 62) in dem dem Flansch (15) zugewandten Stirnseitenbereich innenseitig eine kelchartige Ausnehmung (61) aufweist, die im verpressten Zustand nur teilweise den Kupplungskörper (10) kontaktiert.

28. Rohrkupplung nach einem der Ansprüche 1 - 27
**dadurch gekennzeichnet,**
**dass** der den Typ des jeweiligen Fittings (1, 27, 33) charakterisierende Bereich als separates Teil (2, 28, 34) ausgebildet ist, das mit dem als Kupplungskörper (3, 10) ausgebildeten übrigen Bereich des Fittings (1, 27, 33) stoffschlüssig verbunden ist.

29. Rohrkupplung nach Anspruch 28,
**dadurch gekennzeichnet,**
**dass** die stoffschlüssige Verbindung eine Schweißnaht (4) aufweist.

30. Rohrkupplung nach Anspruch 28,
**dadurch gekennzeichnet,**
**dass** die stoffschlüssige Verbindung eine Lötnaht aufweist.

31. Rohrkupplung nach Anspruch 28,
**dadurch gekennzeichnet,**
**dass** die stoffschlüssige Verbindung eine Klebeschicht aufweist.

32. Rohrkupplung nach den Ansprüchen 28 - 31
**dadurch gekennzeichnet,**
**dass** das separate Teil (2, 28, 34) ganz oder teilweise ein Element eines Standard Fittings ist.

## Claims

1. Pipe coupling, consisting of
- at least one hollow metal coupling body (3.1, 3.2) with a partially profiled inner side which is shaped to accept a metal pipe (8, 9, 67) that is to be connected to the coupling body
- a limit stop for the inserted pipe
- at least one hollow press ring (29.1 - 29.3) which can be squeezed axially with overlap over the outer surface of the coupling body, with the result that at least part of the inner side of the coupling body is squeezed on to the outer surface of the inserted pipe in order to form a metallic seal and axial securing
- wherein the inner side of the coupling body defines teeth (13.1 -13.4) which rest under radial pressure on the outer surface of the pipe when the press ring is squeezed over the outer surface of the coupling body
- an area of the coupling body made in the form of a flange (15), wherein the press ring in the compressed state rests on the flange,
wherein
the coupling body (3, 10, 57, 65) when viewed at the insertion side has a first section (11) with a continuously smooth tapered outer surface (12), on to which adjoins a section with a cylindrical outer surface (14), which section extends as far as the area made in the form of a flange (15), wherein a part of the cylindrical outer surface (14) forms, with the inner side (16) that belongs to it, a first cylindrically shaped section (17), and the flange (15) is connected on the other side to a second cylindrically shaped section (35),
**characterised in that**
on the inner side of the tapered outer surface (12) there are at least two teeth (13) of the same kind and adjacent to each other, wherein the first tooth (13.1), when viewed in the direction of insertion, is positioned in the beginning part of the tapered outer surface (12), and the first cylindrically shaped section (17) adjoins at the last tooth (13.4), the inner side (16) of which cylindrically shaped section extends into the area of the flange (15), and the limit stop for the inserted pipe (8, 9, 67) is present behind the area of the flange (15) when viewed in the direction of insertion,
and, at the end of the extension of the second cylindrically shaped section (35), there adjoins
either a third cylindrically shaped section (20) with a small internal diameter (22), the transition from the second (35) to the third (20) section forming the limit stop for the inserted pipe (8, 9, 67),
or a tubular element which has a cylindrically shaped section of the same type as the second cylindrically shaped section (35), which cylindrically shaped section then changes, by means of a shoulder (7.1), into another cylindrically shaped section (5) with a smaller diameter, the shoulder (7.1) forming the limit stop for the inserted pipe (8, 9).

2. Pipe coupling as in claim 1,
**characterised in that**
the coupling body, comprising the sections (11, 17) with a tapered outer surface and a cylindrical outer surface (12, 14), the flange (15), and the second and third cylindrically shaped sections (35, 20), is made in one piece.

3. Pipe coupling as in claim 1,
**characterised in that**
the coupling body, comprising the sections (11, 17) with a tapered outer surface and a cylindrical outer surface (12, 14), the flange (15), the second cylindrically shaped section (35) and the tubular element, is made in one piece.

4. Pipe coupling as in claims 1 and 2,
**characterised in that**
the third cylindrically shaped section (20) changes into a fourth cylindrically shaped section (21) which has the same internal diameter (22) but a smaller external diameter.

5. Pipe coupling as in claims 1 to 4,
**characterised in that**
the smooth tapered outer surface (12) has an angle of inclination of < 5°.

6. Pipe coupling as in claims 1 to 5,
**characterised in that**
the inner side of the coupling body (3, 10, 57, 65) has three or more teeth (13.1 - 13.4) of the same type, which are positioned in the area of the tapered outer surface (12).

7. Pipe coupling as in claims 1 to 5,
**characterised in that**
the inner side of the coupling body (3, 10, 57, 65) has three or more teeth (13.1 - 13.4) of the same type, of which the last tooth (13.4), viewed in the direction of insertion, is positioned in the area of the cylindrical outer surface (14).

8. Pipe coupling as in claims 1, 6 and 7,
**characterised in that**
the width of the ridge at the base of the teeth (13) is a maximum of 0.2 mm.

9. Pipe coupling as in claims 1, 6 and 7,
**characterised in that**
the base of the tooth (13) is pointed.

10. Pipe coupling as in claims 1, 6 and 7,
**characterised in that**
the spaces between the teeth (13) are equal.

11. Pipe coupling as in claims 1, 6 and 7,
**characterised in that**
the spaces (38 - 40) between the teeth (13.1 - 13.4) become larger, viewed in the direction of insertion.

12. Pipe coupling as in claims 1 and 6 to 11,
**characterised in that**
the teeth (13) are of equal depth.

13. Pipe coupling as in claims 1 and 6 to 11,
**characterised in that**
the depth (41 - 43) of the teeth (13.1 -13.4) increases, viewed in the direction of insertion.

14. Pipe coupling as in claims 1 and 13,
**characterised in that**
the imaginary line connecting the highest points (44 - 46) between the teeth (13.1, 13.4) runs parallel to the slope of the smooth tapered outer surface (12) of the first section (11) of the coupling body (10, 57, 65).

15. Pipe coupling as in one of claims 1 and 6 to 14,
**characterised in that**,
when viewed in cross-section, the flanks of the teeth (13) are circular in shape, the centre point being displaced, symmetrically to two adjacent teeth (13), towards the axis of the coupling body (3).

16. Pipe coupling as in claims 1 and 6 to 14,
**characterised in that**,
when viewed in cross-section, the flank (47) of the tooth (13.1-13.4) that faces towards the input side is curved, and the flank (48) facing towards the flange (15) is straight.

17. Pipe coupling as in one of claims 1 to 16,
**characterised in that**
the front face area of the coupling body (10, 57, 65) has a slip chamfer (26) on the outside.

18. Pipe coupling as in one of claims 1 to 17,
**characterised in that**
the inner side of the front face of the coupling body (10, 57, 65) is made with a square edge and becomes wider in a tapered manner in the direction of insertion and changes into the first tooth (13.1) by means of a rounded transition area.

19. Pipe coupling as in one of claims 1 to 18,
**characterised in that**
the transition from the cylindrical outer surface (14) and from the inner side (16) of the first cylindrically shaped section (17) to the area of the flange (15) is rounded, the internal diameter (18) of this section (17) being greater than the internal diameter (19) of the flange (15).

20. Pipe coupling as in one of claims 1 to 19,
**characterised in that**
the internal diameter (19) of the flange (15) is, at the most, the same or slightly smaller than the internal diameter, lying in a horizontal plane, of the base of the teeth (13).

21. Pipe coupling as in one of claims 1 to 20,
**characterised in that**
the first cylindrically shaped section (17) has an internal diameter (18) which is approximately the same as that of the largest radial extent of the curved recess lying in front of the last tooth (13.4).

22. Pipe coupling as in one of claims 1 to 21,
**characterised in that**,
in the area of the first cylindrically shaped section (17) lying in front of the flange (15), a ring-shaped bead (51) extending outwards is positioned on the outer surface (14), and the press ring (66) has a recess (52) on its inner side which is complementary to it.

23. Pipe coupling as in one of claims 1 to 22,
**characterised in that**
the press ring (66) has, in the area of the front face facing the flange (15), an internal slip chamfer (53), to which adjoins a cylindrical bored hole (54) which then changes, by means of a shoulder (55), into a tapered hole (56), the angle of which is complementary to the angle of the tapered outer surface (12) of the first section (11) of the coupling body (10, 57, 65).

24. Pipe coupling as in one of claims 1 to 21,
**characterised in that**
the coupling body (57) has a ring-shaped recess (59) on its outer surface in the area between the front face and the first tooth (13.1), and the press ring (58) has, on its inner side, a ring-shaped bead (60) made to be complementary to it.

25. Pipe coupling as in one of claims 1 to 21,
**characterised in that**
the front face of the press ring (62) that faces away from the flange (15) is made with a square edge on its inner side, and sits in the area in front of the first tooth (13.1) when compressed.

26. Pipe coupling as in claim 25,
**characterised in that**
the press ring (62) has, on the side facing away from the flange, a recess (63) on the inside which, when compressed, extends as far as the area in front of the first tooth (13.1) of the coupling body (10), and the front faces of the press ring (62) and the coupling body (10) end flush.

27. Pipe coupling as in claims 24 to 26,
**characterised in that**
the press ring (58, 62) has, in the area facing away from the flange (15), a cup-shaped recess (61) on the inside, which when compressed is only in partial contact with the coupling body (10).

28. Pipe coupling as in one of claims 1 to 27,
**characterised in that**
the area that characterises the type of the fitting (1, 27, 33) concerned is made as a separate part (2, 28, 34) which is connected in a material-to-material manner to the remaining area of the fitting (1, 27, 33) that is made in the form of a coupling body (3, 10).

29. Pipe coupling as in claim 28,
**characterised in that**
the material to material connection is a welded joint (4).

30. Pipe coupling as in claim 28,
**characterised in that**
the material-to-material connection is a soldered joint.

31. Pipe coupling as in claim 28,
**characterised in that**
the material-to-material connection is an adhesive coating.

32. Pipe coupling as in claims 28 to 31,
**characterised in that**
the separate part (2, 28, 34) is partially or entirely an element of a standard fitting.

## Revendications

1. Raccord de tuyau comportant - au moins un corps de raccord (3.1, 3.2) creux et métallique ayant une face intérieure en partie profilée, laquelle est réalisée pour recevoir un tuyau métallique (8, 9, 67) à relier au corps de raccord, - une butée pour le tuyau à insérer, - au moins une bague de serrage creuse (29.1 - 29.3) qui peut être enfilée dans le sens axial par-dessus la surface extérieure du corps de raccord avec recouvrement, de telle manière qu'au moins une partie de la face intérieure du corps de raccord soit serrée sur la surface extérieure du tuyau inséré pour former une étanchéité métallique et un blocage axial, la face intérieure du corps de raccord définissant des dispositifs dentés (13.1 - 13.4) qui viennent en appui sur la surface extérieure du tuyau sous la pression radiale lorsque la bague de serrage est enfilée par-dessus la surface extérieure du corps de raccord, - une zone du corps de raccord réalisée sous forme de bride (15), la bague de serrage venant s'appuyer contre la bride à l'état de serrage, le corps de raccord (3, 10, 57, 65) présentant, vu du côté insertion, un premier segment (11) ayant une surface extérieure conique entièrement lisse (12), lequel est suivi d'un segment ayant une surface extérieure cylindrique (14), lequel segment s'étend jusqu'à la zone réalisée en tant que bride (15), une zone partielle de la surface extérieure cylindrique (14) formant un premier segment réalisé de manière cylindrique (17) avec la face intérieure (16) correspondante et la bride (15) étant reliée de l'autre côté à un deuxième segment réalisé de manière cylindrique (35),
**caractérisé en ce que**, sur la face intérieure de la surface extérieure conique (12), sont prévus au moins deux dispositifs dentés (13) identiques situés l'un à côté de l'autre, le premier dispositif denté (13.1), vu dans le sens d'insertion, étant agencé dans la zone de commencement de la surface extérieure conique (12) et le premier segment réalisé de manière cylindrique (17) faisant suite au dernier dispositif denté (13.4), la face intérieure (16) de ce segment s'étendant jusque dans la zone de la bride (15) et la butée pour le tuyau à insérer (8, 9, 67) étant prévue derrière la zone de la bride (15) vue dans le sens d'insertion et **en ce que**, à l'extrémité de l'étendue du deuxième segment réalisé de manière cylindrique (35), fait suite soit un troisième segment réalisé de manière cylindrique (20) présentant un petit diamètre intérieur (22), la transition entre le deuxième segment (35) et le troisième (20) formant la butée pour le tuyau à insérer (8, 9, 67), soit un élément de forme tubulaire qui présente un segment réalisé de manière cylindrique du même type que le deuxième segment réalisé de manière cylindrique (35), lequel se transforme ensuite avec un gradin (7.1) en un autre segment réalisé de manière cylindrique (5) présentant un diamètre intérieur inférieur, le gradin (7.1) formant la butée pour le tuyau à insérer (8, 9).

2. Raccord de tuyau selon la revendication 1, **caractérisé en ce que** le corps de raccord (3, 10, 57, 65), composé des segments (11, 17) présentant une surface extérieure conique (12) et une surface extérieure cylindrique (14), de la bride (15) et des deuxième et troisième segments réalisés de manière cylindrique (35, 20), est réalisé d'un seul tenant.

3. Raccord de tuyau selon la revendication 1, **caractérisé en ce que** le corps de raccord, composé des segments (11, 17) présentant une surface extérieure conique (12) et une surface extérieure cylindrique (14), de la bride (15), du deuxième segment réalisé de manière cylindrique (35) et de l'élément de forme tubulaire, est réalisé d'un seul tenant.

4. Raccord de tuyau selon les revendications 1 et 2, **caractérisé en ce que** le troisième segment réalisé de manière cylindrique (20) se transforme en un quatrième segment réalisé de manière cylindrique (21), lequel présente un diamètre extérieur plus petit avec un diamètre intérieur (22) inchangé.

5. Raccord de tuyau selon les revendications 1 à 4, **caractérisé en ce que** la surface extérieure conique lisse (12) présente un angle d'inclinaison < 5°.

6. Raccord de tuyau selon les revendications 1 à 5, **caractérisé en ce que** la face intérieure du corps de raccord (3, 10, 57, 65) présente trois dispositifs dentés (13.1 - 13.4) ou plus réalisés de manière identique, lesquels sont agencés dans la zone de la surface extérieure conique (12).

7. Raccord de tuyau selon les revendications 1 à 5, **caractérisé en ce que** la face intérieure du corps de raccord (3, 10, 57, 65) présente trois dispositifs dentés (13.1 - 13.4) ou plus réalisés de manière identique, dont le dernier dispositif denté (13.4) vu dans le sens d'insertion est agencé dans la zone de la surface extérieure cylindrique (14).

8. Raccord de tuyau selon les revendications 1, 6, et 7, **caractérisé en ce que** la largeur de dent au niveau du pied du dispositif denté (13) est au plus égale à 0,2 mm.

9. Raccord de tuyau selon les revendications 1, 6 et 7, **caractérisé en ce que** le pied du dispositif denté (13) est réalisé pointu.

10. Raccord de tuyau selon les revendications 1, 6 et 7, **caractérisé en ce que** les écartements entre les dispositifs dentés (13) sont identiques.

11. Raccord de tuyau selon les revendications 1, 6 et 7, **caractérisé en ce que** les écartements (38 - 40) entre les dispositifs dentés (13.1 - 13.4) augmentent vus dans le sens d'insertion.

12. Raccord de tuyau selon les revendications 1 et 6 à 11, **caractérisé en ce que** la hauteur des dispositifs dentés (13) est identique.

13. Raccord de tuyau selon les revendications 1 et 6 à 11, **caractérisé en ce que** la hauteur (41 - 43) des dispositifs dentés (13.1 - 13.4) augmente vue dans le sens d'insertion.

14. Raccord de tuyau selon les revendications 1 et 13, **caractérisé en ce que** la ligne imaginaire reliant les sommets (44 - 46) entre les dispositifs dentés (13.1 - 13.4) est parallèle à l'inclinaison de la surface extérieure conique lisse (12) du premier segment (11) du corps de raccord (10, 57, 65).

15. Raccord de tuyau selon l'une des revendications 1 et 6 à 14, **caractérisé en ce que**, vus en coupe transversale, les flancs du dispositif denté (13) sont de forme circulaire, le point central étant décalé vers l'axe du corps de raccord (3) symétriquement à deux dispositifs dentés (13) voisins.

16. Raccord de tuyau selon les revendications 1 et 6 à 14, **caractérisé en ce que**, vus en coupe transversale, le flanc (47) du dispositif denté (13.1 - 13.4), orienté du côté entrée, est réalisé en forme d'arc et le flanc (48) orienté vers la bride (15) est réalisé droit.

17. Raccord de tuyau selon l'une des revendications 1 à 16, **caractérisé en ce que** la zone de côté frontal du corps de raccord (10, 57, 65) est pourvue d'un biseau de glissement (26) situé à l'extérieur.

18. Raccord de tuyau selon l'une des revendications 1 à 17, **caractérisé en ce que** la face intérieure du côté frontal du corps de raccord (10, 57, 65) est réalisée à angle vif, est élargie en forme de cône dans le sens d'insertion et devient, avec une transition arrondie, le premier dispositif denté (13.1).

19. Raccord de tuyau selon l'une des revendications 1 à 18, **caractérisé en ce que** la transition de la surface extérieure cylindrique (14) et de la face intérieure (16) du premier segment réalisé de manière cylindrique (17) à la zone de la bride (15) est arrondie, le diamètre intérieur (18) de ce segment (17) étant supérieur au diamètre intérieur (19) de la bride (15).

20. Raccord de tuyau selon l'une des revendications 1 à 19, **caractérisé en ce que** le diamètre intérieur (19) de la bride (15) est au plus égal ou légèrement inférieur aux diamètres intérieurs du pied des dispositifs dentés (13) situés sur une horizontale.

21. Raccord de tuyau selon l'une des revendications 1 à 20, **caractérisé en ce que** le premier segment réalisé de manière cylindrique (17) présente un diamètre intérieur (18) qui est approximativement égal à celui de la plus grande étendue axiale de l'évidement en forme d'arc situé devant le dernier dispositif denté (13.4).

22. Raccord de tuyau selon l'une des revendications 1 à 21, **caractérisé en ce qu'**un bourrelet annulaire (51) s'étendant vers l'extérieur est agencé sur la surface extérieure (14) dans la zone du premier segment réalisé de manière cylindrique (17) situé devant la bride (15) et la bague de serrage (66) présente sur la face intérieure un évidement (52) réalisé de manière complémentaire à celui ci.

23. Raccord de tuyau selon l'une des revendications 1 à 22, **caractérisé en ce que** la bague de serrage (66) est pourvue, dans la zone de côté frontal orientée vers la bride (15), d'un biseau de glissement (53) situé à l'intérieur suivi d'un trou cylindrique (54) qui se transforme avec un gradin (55) en un trou conique (56) dont l'inclinaison est complémentaire de l'inclinaison de la surface extérieure conique (12) du premier segment (11) du corps de raccord (10, 57, 65).

24. Raccord de tuyau selon l'une des revendications 1 à 21, **caractérisé en ce que** le corps de raccord (57) est pourvu d'un évidement annulaire (59) sur la surface extérieure dans la zone située entre le côté frontal et le premier dispositif denté (13.1) et la bague de serrage (58) présente sur la face intérieure un bourrelet annulaire (60) réalisé de façon complémentaire à celui-ci.

25. Raccord de tuyau selon l'une des revendications 1 à 21, **caractérisé en ce que** le côté frontal de la bague de serrage (62), orienté à l'opposé de la bride (15), est réalisé à angle vif sur la face intérieure et se trouve dans la zone située devant le premier dispositif denté (13.1) à l'état de serrage.

26. Raccord de tuyau selon la revendication 25, **caractérisé en ce que** la bague de serrage (62) présente à l'intérieur, sur le côté orienté à l'opposé de la bride, un évidement (63) qui s'étend, à l'état de serrage, jusque dans la zone située devant le premier dispositif denté (13.1) du corps de raccord (10) et **en ce que** les côtés frontaux de la bague de serrage (62) et du corps de raccord (10) sont au même niveau.

27. Raccord de tuyau selon les revendications 24 à 26, **caractérisé en ce que** la bague de serrage (58, 62) présente à l'intérieur, dans la zone de côté frontal orientée vers la bride (15), un évidement (61) en forme de coupe qui n'entre que partiellement en contact avec le corps de raccord (10) à l'état de serrage.

28. Raccord de tuyau selon l'une des revendications 1 à 27, **caractérisé en ce que** la zone qui **caractérise** le type du raccord concerné (1, 27, 33) est réalisée en tant que pièce séparée (2, 28, 34) qui est reliée par correspondance de matière à l'autre zone du raccord (1, 27, 33) réalisée en tant que corps de raccord (3, 10).

29. Raccord de tuyau selon la revendication 28, **caractérisé en ce que** la liaison par correspondance de matière présente un cordon de soudure (4).

30. Raccord de tuyau selon la revendication 28, **caractérisé en ce que** la liaison par correspondance de matière présente un cordon de brasage.

31. Raccord de tuyau selon la revendication 28, **caractérisé en ce que** la liaison par correspondance de matière présente une couche de colle.

32. Raccord de tuyau selon les revendications 28 à 31, **caractérisé en ce que** la pièce séparée (2, 28, 34) est en tout ou partie un élément d'un raccord standard.
